(19) **Europäisches Patentamt / European Patent Office / Office européen des brevets**

(11) **EP 2 073 049 B1**

(12) **FASCICULE DE BREVET EUROPÉEN**

(45) Date de publication et mention
de la délivrance du brevet:
**27.04.2011 Bulletin 2011/17**

(51) Int Cl.:
*G02B 17/06* (2006.01)    *G02B 23/06* (2006.01)

(21) Numéro de dépôt: **08171686.2**

(22) Date de dépôt: **15.12.2008**

(54) **Système catoptrique grand angulaire**

Weitwinkel-Katoptriksystem

Wide-angle catoptric system

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **18.12.2007 FR 0708846**

(43) Date de publication de la demande:
**24.06.2009 Bulletin 2009/26**

(73) Titulaire: **THALES**
**92200 Neuilly-sur-Seine (FR)**

(72) Inventeur: **Martin, Philippe**
**06250, MOUGINS (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 379 157**

- **LIDWELL M O: "Mirror Telescope for Long Linear Detector Arrays" PROCEEDINGS OF THE SPIE - THE INTERNATIONAL SOCIETY FOR OPTICAL ENGINEERING, vol. 3429, 1998, pages 19-30, XP002478689 San Diego, USA**

**Description**

La présente invention concerne le domaine des télescopes et plus particulièrement les télescopes d'observations embarqués dans des satellites. Plus précisément, le domaine de l'invention concerne les systèmes catoptriques grand angulaire, notamment pour une large plage spectrale.

Actuellement, une solution classique pour l'observation, notamment de la terre, est l'utilisation de télescopes anastigmats comprenant 3 miroirs, encore appelés « télescopes TMA » selon la terminologie anglo-saxonne désignant « Three Mirrors Anastigmat ». Les télescopes TMA offrent des champs généralement compris entre 25° et 30° d'angle tout en corrigeant les aberrations du 3eme ordre. Mais au-delà de ce champ, les dégradations de l'image deviennent importantes.

Cette limitation de champ n'est pas adaptée à l'évolution des missions d'observation de la terre qui nécessitent de plus en plus de larges champs linéaires afin d'augmenter le champ instantané couvert par l'instrument en rotation autour de la terre. L'intérêt de ces missions est de photographier à intervalles réguliers sur un large champ.

Dans ce contexte, les télescopes de type TMA ne sont plus suffisants pour répondre aux missions nécessitant de photographier de larges champs.

Une solution permettant d'agrandir la largeur du champ est l'utilisation de télescopes anastigmats comprenant quatre miroirs, appelées également dans la terminologie technique FMA pour « Four Mirrors Anastigmat ». Notamment, le Brevet Sagem dont le n° de publication est FR2 764 081 A1 ou bien dans la publication US.5.379.157 A détaille un télescope comprenant quatre miroirs dont le champ possède une largeur maximale de 70° d'angle. Ce champ reste une limitation lorsque l'image est traitée aux conditions aux limites typiquement à +/-35°.

Une solution pour agrandir le champ peut être d'augmenter la fente qui diaphragme le champ. Dans ce dernier cas, les aberrations de l'image, et particulièrement la distorsion de l'image produite, sont très vite importantes et ne permettent pas d'obtenir une image de bonne qualité sur toute la largeur du champ limité au niveau du diaphragme d'ouverture.

Un but de l'invention est de remédier à ces inconvénients et permet notamment de dépasser les limitations actuelles de largeur de champs pour les télescopes d'observations. L'invention propose de disposer de quatre miroirs de telle manière à ce que le premier miroir M1 est convexe et le second miroir M2 est concave et que les deux miroirs M1, M2 possèdent sensiblement le même rayon de courbure.

Avantageusement, le système catoptrique grand angulaire à champ rectangulaire pour l'astronomie ou l'observation de la Terre, comprend un premier miroir M1, un second miroir M2, un troisième miroir M3 et un quatrième miroir M4.

Avantageusement, le premier miroir est convexe, le second miroir est concave et les rayons de courbures du premier M1 et du second M2 sont sensiblement égaux.

Avantageusement, le rapport entre :

- la distance algébrique (S'2) calculée à partir du miroir M2 jusqu'au foyer du système formé du premier et du second miroirs (M1, M2) ;
- la distance algébrique (S2) calculée à partir du miroir M2 jusqu'au foyer du miroir M1

est compris dans la plage [0, 1].

Avantageusement, la focale du système formé par le premier miroir M1 et le second miroir M2 miroir multipliée par $2\sqrt{2}$ est sensiblement égale au rayon de courbure du miroir M1 ou M2.

Avantageusement, le miroir M3 est convexe et/ou le miroir M4 est concave.

Avantageusement, les miroirs M1, M2, M3 et m4 ont des formes de révolutions, telles que :

- M1 est asphérique à l'ordre 6 ;
- M2 est une ellipsoïde ;
- M3 et M4 sont sphéroïdes aplaties.

Avantageusement, la pupille du télescope est sur M3.

Avantageusement, le nombre d'ouverture est supérieur ou égal à 3,8

Avantageusement, les entre-verres sont sensiblement proches des valeurs suivantes :

- d(M1-M2) = 154mm ;
- d(M2-M3) = 80mm ;
- d(M3-M4) = 55mm ;
- d(M4-image) = 75mm.

Avantageusement, le champ linéaire est de 2° x 85°.

Avantageusement, le télescope possède une longueur sensiblement proche de 170mm.

Avantageusement, le télescope possède une hauteur sensiblement proche de 45mm.

Avantageusement, le télescope possède une largeur de 110mm.

D'autres caractéristiques et avantages de l'invention apparaîtront à l'aide de la description qui suit, faite en regard des dessins annexés qui représentent :

- la figure 1 représente le schéma du principe général d'un télescope imageur fournissant l'image d'un objet à un Spectromètre ;
- la figure 2 représente un mode de réalisation de la disposition des miroirs M1 et M2 ;
- la figure 3 représente un mode de réalisation d'un télescope quatre miroirs selon l'invention.
- La figure 4 représente le système selon l'invention vue de dessus

Dans la présente invention, le système comprend quatre miroirs dont les deux premiers M1 et M2 ont sensiblement le même rayon de courbure. M1 est convexe et M2 est concave.

Un cas d'exemple d'un cas de réalisation décrit ci-après est pris pour un rayon de courbure de M1 égal à 197 mm et un rayon de courbure de M2 égal à 203 mm. On considère dans ce dernier cas que les deux rayons de courbures sont sensiblement égaux au signe près, l'écart entre les deux rayons de courbure étant de 3%.

Parmi les différentes configurations possibles de disposition entre M1 et M2, le système selon l'invention permet de disposer les miroirs M1 et M2 de telle manière que le rapport entre la distance algébrique entre l'image produite par M2 et le miroir M2 et la distance algébrique entre l'image produite par M1 et le miroir M2 est comprise dans la plage [-1, 0].

Dans la présente invention, le système comprend un miroir M1 dont un terme de déformée d'ordre 6 permet de corriger certaines aberrations. Ce terme rend le miroir légèrement asphérique.

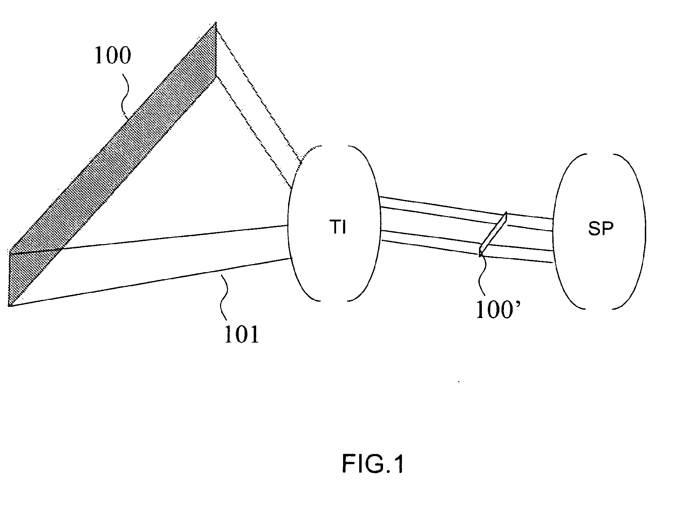

La figure 1 représente le principe général d'un télescope imageur TI généralement associé à un spectromètre à fente, notamment dans les missions d'observations. L'image 100' d'un objet 100 est formée à partir de rayons lumineux entrants 101 dans le télescope TI et convergent en sortie du télescope au foyer. L'image 100' peut alors être la source d'un spectromètre à fente permettant de disperser la lumière de manière à étaler le spectre.

Le système selon l'invention est un télescope imageur de type catoptrique comportant 4 miroirs, notés M1, M2, M3 et M4 dans la suite de la description.

Un mode de réalisation selon l'invention propose un télescope dont les miroirs sont légèrement inclinés les uns par rapport aux autres. L'angle de champ entre le miroir M1 et les rayons lumineux d'entrées est proche de 30° d'angle.

Un mode de réalisation selon l'invention propose un télescope ayant un encombrement réduit. L'encombrement total, pour une focale de 45mm, est de 170mm de longueur, 45mm de hauteur et 110mm de largeur.

Afin d'obtenir un large champ, le système catoptrique possède un nombre d'ouverture réduit, celui-ci est défini par le rapport F/D, « F » désignant la distance focale et « D » le diamètre de la pupille d'entrée désignant l'ouverture du télescope, on parle alors de télescope « compact ». Un exemple de cas de réalisation est pris pour un nombre d'ouverture égal à 3,8.

Un tel rapport de la focale sur le diamètre d'ouverture permet d'obtenir un large champ de l'objet imagé, celui-ci peut être de l'ordre de 85°x2° de forme rectangulaire.

Dans ces conditions le champ admissible par le télescope est de +/-42,5°

Afin de ne pas dégrader l'image obtenue par les quatre miroirs M1, M2, M3 et M4, formant un télescope de type FMA, le système selon l'invention propose de disposer d'un premier miroir M1 convexe et d'un second miroir M2 concave.

Les miroirs sont des surfaces de révolution. La description de ces surfaces se fait sur une méridienne qui est définie par l'équation de la flèche Z en fonction de la distance h à l'axe optique par la formule suivante :

$$Z = \frac{\dfrac{h^2}{R}}{1 + \sqrt{1 - (1+k)\dfrac{h^2}{R^2}}} + Ah^4 + Bh^6 + Ch^8 + Dh^{10}$$

avec les coefficients définis comme suit :

- R : Rayon de courbure au sommet de la surface
- K : constante de conicité de la surface
- A : constante de déformée d'ordre 4

- B : constante de déformée d'ordre 6
- C : constante de déformée d'ordre 8
- D : constante de déformée d'ordre 10

Cette déformation permet de définir la forme des miroirs employés dans la combinaison optique du système. Les termes A, B, C, D sont des termes d'« asphéricité » ou encore appelés de déformée, propre à la forme du miroir. Dans un mode de réalisation, l'invention propose de disposer de quatre miroirs M1, M2, M3, M4 tels que :

- la forme de M1 est asphérique au 6eme ordre, les termes A, C et D sont nuls et B est non nul.
- la forme de M2 est une ellipsoïde, A, B, C, et D sont nuls et k est compris entre -1 et 0 ;
- la forme de M3 est une sphéroïde aplatie, A, B, C, et D sont nuls et k est non nul ;
- la forme de M4 est sphéroïde aplatie, A, B, C, et D sont nuls et k est non nul.

Un mode de réalisation permet de disposer les miroirs de telle manière que

- la distance $D_{12}$ entre M1 et M2 est sensiblement proche de 155mm ;
- la distance $D_{23}$ entre M2 et M3 est sensiblement proche de 80mm ;
- la distance $D_{34}$ entre M3 et M4 est sensiblement proche de 55mm ;
- la distance $D_{4image}$ entre M4 est l'image est sensiblement proche de 75mm, distance appelée « tirage ».

Dans un mode de réalisation le rapport de la focale sur l'entre verre est sensiblement proche de 0,5. Il peut être de l'ordre de 0,4 dans un cas proche.
Pour un tel champ linéaire de 85°, le système selon l'invention réduit au 3eme ordre les aberrations sphériques, la coma, l'astigmatisme et la courbure de champ.

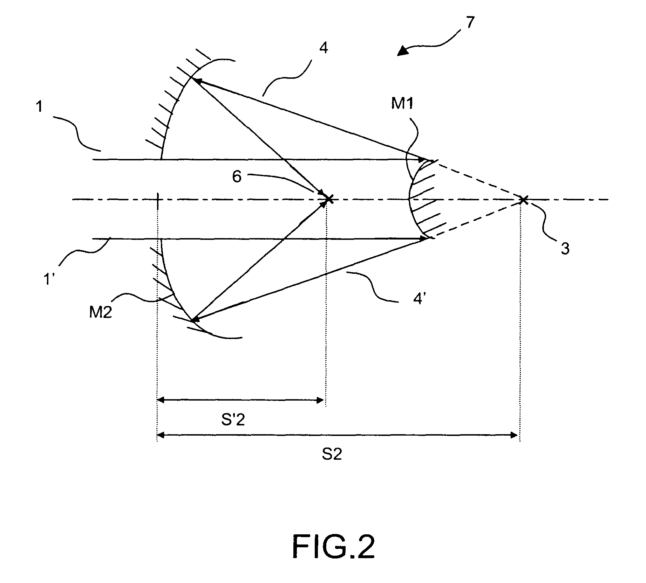

La figure 2 représente un télescope formé des miroirs M1 et M2 centrés.
Les rayons lumineux parallèles 1 et 1' sont réfléchis par M1, miroir de type convexe, sur M2, le point 3 étant considéré comme l'objet virtuel de M2, source des rayons 4, 4' se réfléchissant sur M2. L'image finale étant formée au foyer 6 du télescope.
Dans cet exemple, la distance $S_2$ est la distance algébrique entre le miroir M2 et le foyer de M1, et d'autre part la distance $S_2'$ est la distance algébrique entre le miroir M2 et le foyer du télescope. Le système selon l'invention comprend deux miroirs M1 et M2 dont le rapport $\dfrac{S_2'}{S_2}$ est compris dans l'intervalle [0,1].

Le système formé des miroirs M1 et M2 est aplanétique, il corrige les aberrations sphériques et la coma au troisième ordre. Le système formé des miroirs M1 et M2, dans un mode de réalisation, est combiné avec un miroir M3 de type convexe qui limite le diaphragme d'ouverture. Dans ce cas, la pupille du télescope est située sur M3.
Un cas de réalisation permet de disposer d'un quatrième miroir M4 concave qui permet d'obtenir une image de bonne qualité de l'objet du système catoptrique dans un champ de 85°.

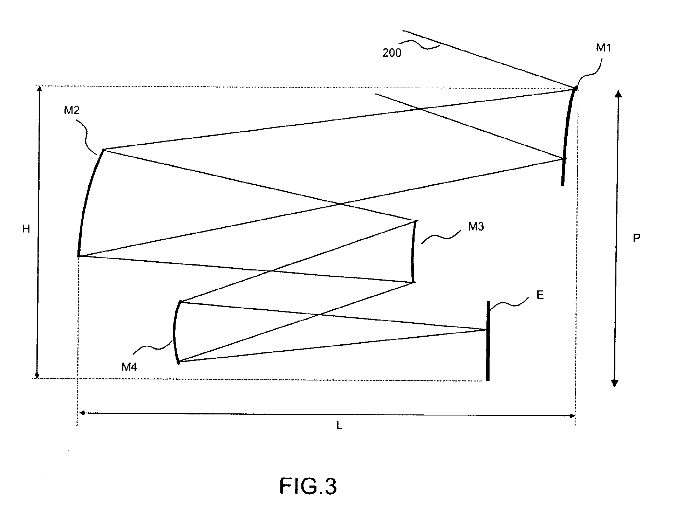

La figure 3 représente l'association des quatre miroirs M1, M2, M3 et M4 disposés de manière à ce qu'ils soient tous sensiblement sur un même axes, le dessin n'étant pas à l'échelle. Les rayons lumineux 200 arrivants sur M1 avec un angle proche de 30° sont réfléchis sur M2 puis sur M3 et enfin sur M4 qui ce dernier reconstruit l'image en un point du plan focal E du miroir M4.

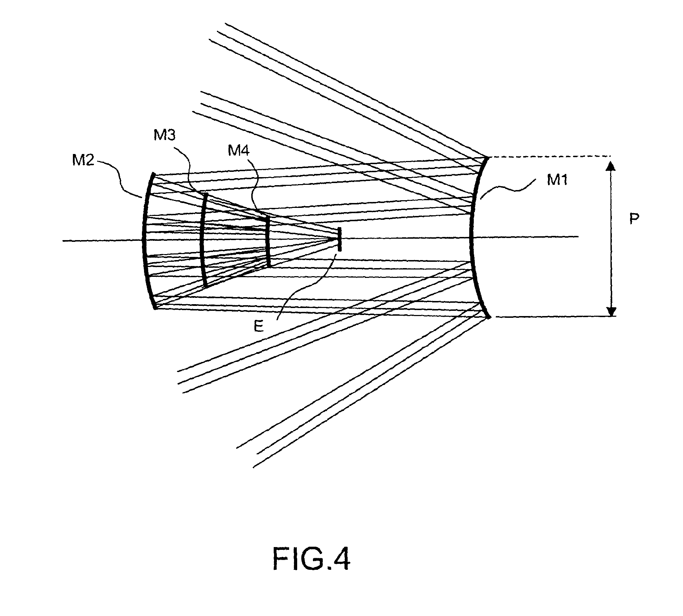

La figure 4 représente une vue de dessus du système selon l'invention ou la largeur P correspond à la largeur du miroir M1.
L'encombrement total L/H/P des quatre miroirs disposés selon le système de l'invention occupe un faible espace, un cas de réalisation ayant les dimensions suivantes: 170mm/45mm/110mm. Une telle dimension est similaire à des télescopes de type FMA ou TMA.
La qualité image est supérieure à la limite de diffraction à 587nm en moyenne dans le champ.
Ce type de champ linéaire, offre des avantages en terme de champ instantané couvert par le télescope.
La matière utilisée est de préférence le verre pour les miroirs et le carbone pour la structure.

## Revendications

1. Système catoptrique grand angulaire à champ rectangulaire pour l'astronomie ou l'observation de la Terre, comprenant un premier miroir M1, un second miroir M2, un troisième miroir M3 et un quatrième miroir M4, **caractérisé en ce que** le premier miroir est convexe, le second miroir est concave et que les rayons de courbure du premier M1 et second M2 sont sensiblement égaux, le rapport entre :

• la distance algébrique (S'2) calculée à partir du miroir M2 jusqu'au foyer du système formé du premier et du second miroirs (M1, M2) ;
• la distance algébrique (S2) calculée à partir du miroir M2 jusqu'au foyer du miroir M1

étant compris dans la plage [0, 1].

**2.** Système catoptrique selon la revendication 1, **caractérisé en ce que** la focale du système formé par le premier miroir M1 et le second miroir M2 miroir multipliée par $2\sqrt{2}$ est sensiblement égale au rayon de courbure du miroir M1 ou M2.

**3.** Système catoptrique selon l'une des revendications 1 à 2, **caractérisé en ce que** le miroir M3 est convexe.

**4.** Système catoptrique selon l'une des revendications 1 à 3, **caractérisé en ce que** le miroir M4 est concave.

**5.** Système catoptrique selon l'une des revendications 1 à 4, **caractérisé en ce que** les miroirs M1, M2, M3 et M4 ont des formes de révolutions, telles que :

   • M1 est asphérique à l'ordre 6 ;
   • M2 est une ellipsoïde ;
   • M3 et M4 sont sphéroïdes aplaties.

**6.** Système catoptrique selon l'une des revendications 1 à 5, **caractérisé en ce que** la pupille du télescope est sur le miroir M3.

**7.** Système catoptrique selon l'une des revendications 1 à 6, **caractérisé en ce que** le nombre d'ouverture est supérieur ou égal à 3,8

**8.** Système catoptrique selon la revendication 7, **caractérisé en ce que** les entre-verres sont sensiblement proches des valeurs suivantes :

   • d(M1-M2) = 154mm ;
   • d(M2-M3) = 80mm ;
   • d(M3-M4) = 55mm ;
   • d(M4-image) = 75mm.

**9.** Système catoptrique selon la revendication 8, **caractérisé en ce que** le champ linéaire est de 2° x 85°.

**10.** Système catoptrique selon l'une des revendications 1 à 9, **caractérisé en ce que** le télescope possède une longueur sensiblement proche de 170mm.

**11.** Système catoptrique selon l'une des revendications 1 à 10, **caractérisé en ce que** le télescope possède une hauteur sensiblement proche de 45mm.

**12.** Système catoptrique selon l'une des revendications 1 à 11, **caractérisé en ce que** le télescope possède une largeur de 110mm.

**Claims**

**1.** A wide-angle rectangular field catoptric system for astronomy or earth observation, comprising a first mirror M1, a second mirror M2, a third mirror M3 and a fourth mirror M4, **characterised in that** the first mirror is convex, the second mirror is concave and **in that** the radii of curvature of the first M1 and second M2 mirrors are substantially equal, the ratio between:

   - the algebraic distance (S'2) calculated from mirror M2 to the focus of the system formed from the first and second mirrors (M1, M2); and,
   - the algebraic distance (S2) calculated from the second mirror M2 to the focus of mirror M1,

being included in the range [0, 1].

2.  The catoptric system according to claim 1, **characterised in that** the focal length of the system formed by the first mirror M1 and the second mirror M2 multiplied by 2√2 is substantially equal to the radius of curvature of mirror M1 or M2.

3.  The catoptric system according to any one of claims 1 to 2, **characterised in that** mirror M3 is convex.

4.  The catoptric system according to any one of claims 1 to 3, **characterised in that** mirror M4 is concave.

5.  The catoptric system according to any one of claims 1 to 4, **characterised in that** mirrors M1, M2, M3 and M4 are in the form of revolutions, such that:

    - M1 is aspherical to the order of 6;
    - M2 is ellipsoidal;
    - M3 and M4 are flattened spheroidals.

6.  The catoptric system according to any one of claims 1 to 5, **characterised in that** the pupil of the telescope is on mirror M3.

7.  The catoptric system according to any one of claims 1 to 6, **characterised in that** the aperture number is greater than or equal to 3.8.

8.  The catoptric system according to claim 7, **characterised in that** the distances between lenses are essentially equal to the following values:

    - d(M1-M2) = 154mm;
    - d(M2-M3) = 80mm;
    - d(M3-M4) = 55mm;
    - d(M4-image) = 75mm.

9.  The catoptric system according to claim 8, **characterised in that** the linear field is 2° x 85°.

10. The catoptric system according to any one of claims 1 to 9, **characterised in that** the length of the telescope is essentially in the vicinity of 170mm.

11. The catoptric system according to any one of claims 1 to 10, **characterised in that** the height of the telescope is essentially in the vicinity of 45mm.

12. The catoptric system according to any one of claims 1 to 11, **characterised in that** the width of the telescope is 110mm.


**Patentansprüche**

1.  Weitwinkliges katoptrisches System mit rechteckigem Feld für Astronomie oder Erdbeobachtung, das Folgendes umfasst: einen ersten Spiegel M1, einen zweiten Spiegel M2, einen dritten Spiegel M3 und einen vierten Spiegel M4, **dadurch gekennzeichnet, dass** der erste Spiegel konvex ist, der zweite Spiegel konkav ist und die Krümmungsradien des ersten M1 und des zweiten M2 Spiegels im Wesentlichen gleich sind, wobei das Verhältnis zwischen:

    - algebraischer Distanz (S'2), berechnet vom Spiegel M2 zum Brennpunkt des Systems, gebildet vom ersten und vom zweiten Spiegel (M1, M2);
    - algebraischer Distanz (S2), berechnet vom Spiegel M2 zum Brennpunkt von Spiegel M1,

    im Bereich [0, 1] liegt.

2.  Katoptrisches System nach Anspruch 1, **dadurch gekennzeichnet, dass** die Fokallänge des Systems, gebildet vom ersten Spiegel M1 und vom zweiten Spiegel M2 multipliziert mit 2√2, im Wesentlichen gleich dem Krümmungsradius von Spiegel M1 oder M2 ist.

3. Katoptrisches System nach einem der Ansprüche 1 bis 2, **dadurch gekennzeichnet, dass** der Spiegel M3 konvex ist.

4. Katoptrisches System nach einem der Ansprüche 1 bis 3, **dadurch gekennzeichnet, dass** der Spiegel M4 konkav ist.

5. Katoptrisches System nach einem der Ansprüche 1 bis 4, **dadurch gekennzeichnet, dass** die Spiegel M1, M2, M3 and M4 Drehungsformen haben, so dass:

   - M1 asphärisch gemäß Ordnung 6 ist;
   - M2 ein Ellipsoid ist;
   - M3 und M4 abgeflachte Sphäroide sind.

6. Katoptrisches System nach einem der Ansprüche 1 bis 5, **dadurch gekennzeichnet, dass** die Pupille des Teleskops auf dem Spiegel M3 ist.

7. Katoptrisches System nach einem der Ansprüche 1 bis 6, **dadurch gekennzeichnet, dass** die Blendenzahl gleich oder größer als 3,8 ist.

8. Katoptrisches System nach Anspruch 7, **dadurch gekennzeichnet, dass** die Zwischenlinsenabstände im Wesentlichen wie folgt lauten:

   - d(M1-M2) = 154 mm;
   - d(M2-M3) = 80 mm;
   - d(M3-M4) = 55 mm;
   - d(M4-image) = 75 mm.

9. Katoptrisches System nach Anspruch 8, **dadurch gekennzeichnet, dass** das lineare Feld 2° x 85° beträgt.

10. Katoptrisches System nach einem der Ansprüche 1 bis 9, **dadurch gekennzeichnet, dass** die Länge des Teleskops im Wesentlichen nahe 170 mm liegt.

11. Katoptrisches System nach einem der Ansprüche 1 bis 10, **dadurch gekennzeichnet, dass** die Höhe des Teleskops im Wesentlichen nahe 45 mm liegt.

12. Katoptrisches System nach einem der Ansprüche 1 bis 11, **dadurch gekennzeichnet, dass** die Breite des Teleskops 110 mm beträgt.

FIG.1

FIG.2

FIG.3

FIG.4

**EP 2 073 049 B1**

**RÉFÉRENCES CITÉES DANS LA DESCRIPTION**

**Documents brevets cités dans la description**

- FR 2764081 A1
- US 5379157 A